# EUROPÄISCHE PATENTSCHRIFT

(11) **EP 0 792 298 B1**
(45) Veröffentlichungstag und Bekanntmachung des Hinweises auf die Patenterteilung: **09.09.1998**
(21) Anmeldenummer: 95937072.7
(22) Anmeldetag: 14.11.1995
(51) Int. Cl.: C08F 265/04

(54) **VERFAHREN ZUR HERSTELLUNG VON KAUTSCHUKMODIFIZIERTEN FORMMASSEN MITTELS IN DEN KAUTSCHUK EINGEBAUTEN, BEI THERMISCHER ZERSETZUNG RADIKALE BILDENDEN GRUPPEN**
PROCESS FOR PRODUCING MODIFIED RUBBER MOULDING MASSES BY INCORPORATING GROUPS INTO THE RUBBER THAT FORM RADICALS BY THERMAL DECOMPOSITION
PROCEDE DE PREPARATION DE MASSES DE MOULAGE EN CAOUTCHOUC MODIFIE PAR INCORPORATION AU CAOUTCHOUC DE GROUPES QUI FORMENT DES RADICAUX PAR DECOMPOSITION THERMIQUE

(30) Priorität: 14.11.1994 DE 4440675
(43) Veröffentlichungstag der Anmeldung: 03.09.1997
(73) Patentinhaber: BASF AKTIENGESELLSCHAFT, 67056 Ludwigshafen (DE)
(72) Erfinder: MC KEE, Graham, Edmund, D-67433 Neustadt (DE); MOORS, Rainer, D-76726 Germersheim (DE); GAUSEPOHL, Hermann, D-67112 Mutterstadt (DE); SEIBRING, Joachim, D-67251 Freinsheim (DE)
(74) Vertreter: Isenbruck, Günter, Dr.
(86) Internationale Anmeldenummer: EP9504474
(87) Internationale Veröffentlichungsnummer: WO9615166

(56) Entgegenhaltungen:
- EP-A- 0 206 644
- EP-A- 0 539 988
- FR-A- 1 414 172
- FR-A- 2 328 004

## Beschreibung

Die Erfindung betrifft ein Verfahren zur Herstellung von kautschukmodifizierten Formmassen, wobei in den Kautschuk bei thermischer Zersetzung Radikale bildende Gruppen eingebaut werden, und nach dem Verfahren hergestellte kautschukmodifizierte Formmassen.

Kautschukmodifizierte Formmassen sind Massen, bei denen Domänen von Elastomeren, z.B. Kautschuken, in eine Matrix aus einem Thermoplasten eingebettet sind. Es besteht ein großer Bedarf an kautschukmodifizierten Formmassen, die Oberflächenglanz, Schlagzähigkeit und Reißfestigkeit aufweisen. Dabei ist die charakteristische Domänenstruktur für die erwünschten mechanischen Eigenschaften verantwortlich.

Die Mehrphasigkeit und damit auch die Domänenstruktur von kautschukmodifizierten Formmassen beruht darauf, daß diese aus verschiedenen Polymerkomponenten aufgebaut sind, die nicht oder nur teilweise miteinander mischbar sind. Die Schlagzähigkeit derselben resultiert aus einer erhöhten Energieaufnahme bei der Deformation bis zum Bruch. Die Energie wird dabei zur Bildung von Mikrohohlräumen oder zur Einleitung von Abgleitvorgängen der Matrixpolymerketten verbraucht. Die Mehrphasigkeit ist deshalb eine notwendige Voraussetzung für das Erreichen hoher Schlagzähigkeiten.

Im übrigen gilt folgendes:
1. Die zwei chemisch verschiedenen Polymerkomponenten bilden eine stabile Dispersion mit definierter Teilchengröße, die im Bereich der thermoplastischen Schmelze (Verarbeitung) weder Phasenseparation zeigt, noch bei intensiverer Temperatureinwirkung zur Homogenisierung unter Bildung einer makromolekularen Lösung neigt.
2. Zwischen den Elastomerpartikeln und der Matrix muß eine Kopplung bestehen, d. h. an den Phasengrenzflächen müssen Kräfte übertragen werden können.

Die wirkungsvollste Phasenkopplung an den Grenzflächen der Elastomerteilchen wird durch Pfropfcopolymerisation erreicht. Z.B. wird bei der Herstellung von Acrylnitril-Styrol-Acrylat-(ASA)-Formmassen in der Regel so verfahren, daß ein Acrylat-Kautschuk vorgelegt wird, auf den anschlieβend durch Polymerisation mit einem Monomerengemisch aus Styrol und Acrylnitril Copolymerer auf der Basis der beiden letzteren Monomeren aufgepfropft werden.

EP 0 095 919, EP 0 143 991, EP 0 438 418, EP 0 001 782, DE 11 828 11, JA 71 03 182, JA 60 21 0666 und B. Vollmert, "Angewandte Makromolekulare Chemie", 3, Band 18, (1968), S. 1-27, beschreiben die Herstellung von mit Acrylatkautschuken modifizierten Thermoplasten.

Der Erfindung liegt daher die Aufgabe zugrunde, ein Verfahren zur Herstellung von kautschukmodifizierten Formmassen mit verbesserten mechanischen Eigenschaften, insbesondere erhöhten Schlagzähigkeiten, Kerbschlagzähigkeiten, und Lochkerbschlagzähigkeiten, zu schaffen.

Diese Aufgabe wird durch das erfindungsgemäße Verfahren gelöst, bei dem in einer ersten Stufe ein erstes Gemisch (A), das zumindest ein Alkylacrylat oder -methacrylat (a) der allgemeinen Formel (I) 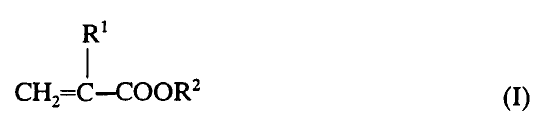
in der R¹ ein Wasserstoffatom oder eine Methylgruppe und R² eine Alkylgruppe mit 1 bis 32 Kohlenstoffatomen bedeutet, zumindest ein erstes Monomeres (b), das bei thermischer Zersetzung Radikale bildet, und gegebenenfalls ein zweites Monomeres (c) oder mehrere enthält, mit freien Radikalen zu einem Kautschuk (B), vorzugsweise in Lösung, polymerisiert wird,
in einer zweiten Stufe der entstandene Kautschuk (B) zur Bildung eines zweiten Gemisches (C) in einem dritten Monomeren (d) oder mehreren vermischt, vorzugsweise in diesem gelöst oder gequollen, wird und
in einer dritten Stufe das zweite Gemisch (C) mit freien Radikalen zu der kautschukmodifizierten Formmasse (D) polymerisiert wird.

Das bei thermischer Zersetzung freie Radikale bildende erste Monomere (b) soll bei seiner eigenen Polymerisation keine oder nur wenige freien Radikale bilden.

Das erfindungsgemäße Verfahren hat den Vorteil, daß außer den bereits genannten Eigenschaften noch die Witterungsbeständigkeit und Steifigkeit der Formmassen verbessert wird. Durch Variieren der Herstellungsparameter kann dabei der Glanz der hergestellten Formmassen über eine große Spannweite variiert werden.

In der dritten Stufe findet dabei eine Pfropfcopolymerisation statt, wobei das Rückgrat des entstehenden Pfropfcopolymeren von dem Kautschuk (B) gebildet wird und die Pfropfäste aus dem dritten Monomeren (d) aufgebaut sind. Weil keine 100%-ige Pfropfung stattfindet, bleibt ein Teil des Kautschuks ungepfropft und es wird gleichzeitig ein ungepfropftes Kettenpolymeres aus dem oder den dritten Monomeren (d) gebildet, das die sogenannte Hartmatrix ausmacht. In der Formmasse liegen also mindestens drei Arten von Molekülen vor.

Die in den Kautschuk über das erste Monomere (b) eingebauten Gruppen bilden bei thermischer Zersetzung Radikale und wirken daher in der dritten Stufe wie ein Radikalstarter, so daß derzeit davon ausgegangen wird, daß eine größere Anzahl von Pfropfästen, verglichen mit Kautschuken ohne diese Gruppen, gebildet wird. Bei den erfindungsgemäß eingebauten, radikalbildenden Gruppen liegt die Temperatur, bei der sie eine Halbwertszeit von einer Stunde haben, so hoch, daß sie im Verfahren vor der dritten Stufe stabil sind, insbesondere im Bereich zwischen 80°C und 200°C, vorzugsweise zwischen 80 und 150°C. Beispiele für solche Gruppen sind Peroxigruppen, Diazogruppen und gegen thermische Zersetzung empfindliche C-C- Doppelbindungen. Beispiele für geeignete Monomere (c) die diese Gruppen enthalten, sind tert.-Butyl-3-Isopropenyl-cumyl-peroxyd, tert.-Butylperoxycrotinat und tert.-Butyl-monoperoxy-maleat, wobei die beiden ersteren bevorzugt sind.

Die Bestimmung der Temperatur, bei der die Monomeren (b) eine Halbwertszeit von einer Stunde aufweisen, ist in der Broschüre "Initiators for Polymer Production" der Firma AKZO (Code:92.10.10891), beschrieben.

Beispiele für Alkylgruppen R² mit 1 bis 32 Kohlenstoffatomen sind die Methyl-, Ethyl-, n-Propyl-, iso-Propyl-, n-Butyl-, iso-Butyl-, tert.-Butyl-, n-Pentyl-, iso-Pentyl-, n-Hexyl-, n-Heptyl-, n-Octyl-, Ethylhexyl-, n-Nonyl-, n-Decyl-, n-Dodecyl-, n-Tetradecyl-, n-Hexadecyl-, n-Octadecyl-, n-Eicosyl-, n-Docosyl-, n-Tetracosyl-, n-Hexacosyl-, n-Octacosyl-, n-Triacontyl-, n-Hentriacontyl- und Dotriacontyl-Gruppe.

Gemäß einer bevorzugten Ausführungsform der Erfindung ist R² eine Alkylgruppe mit 1 bis 18 Kohlenstoffatomen.

Gemäß einer weiteren bevorzugten Ausführungsform der Erfindung weist das Gemisch (A) die folgende Zusammensetzung auf:
30 bis 99,95 Gew.-% des Acrylats oder -methacrylats (a),
0,05 bis 10 Gew.-% des ersten Monomeren (b) und
0 bis 60 Gew.-% des zweiten Monomeren (c),
die bevorzugten Bereiche sind:
36 bis 99,5 Gew.-% (a),
0,1 bis 4 Gew.-% (b),
0 bis 60 Gew.-% (c).

Der Kautschuk (B) hat vorzugsweise eine Glastemperatur von weniger als 0 °C, bevorzugt weniger als -10 °C, wobei die Bestimmung der Glastemperatur mittels DSC nach ASTM 3418 erfolgt. Der Kautschuk weist damit die erforderliche Weichheit auf. Die Glastemperatur kann dabei entweder durch Verwendung eines Acrylats oder Methacrylats, dessen Polymeres die erwünschte Glastemperatur aufweist, oder durch Verwendung eines Gemisches von Acrylaten oder Methacrylaten die verschiedene Längen der Seitenketten (R², in Formel I) aufweisen, eingestellt werden. Diese Einstellung der Glastemperatur beruht darauf, daß die Glastemperatur von Acrylat- und Methacrylatpolymeren mit zunehmender Länge der Seitenkette zunächst abnimmt, dann ein Minimum durchläuft und schließlich wieder zunimmt. Das Minimum liegt bei einer Seitenkette von etwa 7 Kohlenstoffatomen für Polyacrylate und von 10 für Polymethacrylate. Dieser allgemeine Bereich für die Länge der Seitenkette R² ist daher bevorzugt. Die hergestellte kautschukmodifizierte Formmasse (D) enthält 1 bis 60 Gew.-%, vorzugsweise 5 bis 40 Gew.-%, des Kautschuks (B). Die Obergrenze ergibt sich daraus, daß die Formmasse trotz der eingebetteten Domänen des Kautschuks eine ausreichende Festigkeit aufweisen muß. Die Untergrenze wird im wesentlichen dadurch bestimmt, daß bei der Deformation ausreichend Energie aufgenommen werden muß.

Gemäß einer weiteren bevorzugten Ausführungsform der Erfindung wird als Alkylacrylat oder -methacrylat (a) n-Butylacrylat oder Ethylhexylacrylat verwendet.

Als Monomere (c) können solche verwendet werden, die zwei oder mehr polymerisierbare Doppelbindungen aufweisen, z.B. Allylmethacrylat, Butandioldiacrylat, Divinylbenzol, Triallylcyanurat und Dihydrodicyclopentadienylacrylat, wobei Allylmethacrylat bevorzugt ist.

Weitere Beispiele für Monomere (c) sind Styrol, Acrylnitril, Acrylsäure, Methacrylsäure, Derivate der beiden letzteren wie Methylmethacrylat, Acrylamid, Methacrylamid, Glycidylacrylat und Glycidylmethacrylat, Maleinsäureanhydrid, Maleinimid und Ethylen. Bevorzugt sind Styrol der Formel 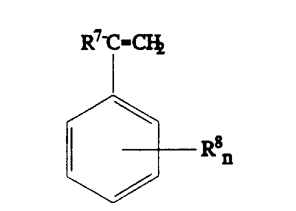 in der R⁷ und R⁸, die gleich und verschieden sein können, Wasserstoff und Alkyl mit 1-8 C-Atomen und n Werte von 0 bis 4 bedeuten, Acrylnitril und/oder Methylmethacrylat.

Weitere Beispiele für Monomere (c) sind Derivate des Acrylamids und -methacrylamids, wie Acrylamid-methylol-methylether, N-Methylol-acrylamid, Methacrylamid-methylol-methylether, N-Methylol-methacrylamid, Methacryllamid-N-methylolbutylether, und Methacrylamid-N-methylolacetat. Das Gemisch (A) enthält bis zu 60 Gew.-%, vorzugsweise bis zu 40 Gew.-% dieser Monomeren.

Beispiele für die Monomeren (d) sind die bereits für (c) genannten, vorzugsweise Styrol und Acrylnitril. Nach dem erfindungsgemäßen Verfahren werden demnach insbesondere ASA-Formmassen hergestellt.

In der dritten Stufe des erfindungsgemäßen Verfahrens kann die Polymerisation entweder durchgehend in Lösung oder in Masse durchgeführt werden oder nach einem Umsatz von mindestens 15% als Suspensionspolymerisation weitergeführt werden.

Der Gehalt an Acrylat-Monomereinheiten in dem Kautschuk liegt bei mindestens 30 Gew.-%, bevorzugt mindestens 60 Gew.-%, besonders bevorzugt mindestens 90 Gew.-%.

Die Erfindung wird im folgenden anhand besonders bevorzugter Ausführungsbeispiele näher beschrieben.

Die Kautschuke in gepfropfter Form kommen in der Formmasse als Teilchen mit einem Durchmesser zwischen 0,1 und 20 µm, bevorzugt zwischen 0,1 und 10 µm, in der Polymermatrix vor. Bevorzugt werden bi- oder trimodale Verteilungen. Die Kautschukteilchen liegen im Form von Kapseln, Stäbchen, Tropfen, Labyrinthen, Zellen, Knäueln, Schalen, Stäbchenclustern oder Tropfenclustern vor. Jedoch werden auch Teilchen, die aus mehreren kugelförmigen Teilchen bestehen, beobachtet. Bevorzugt werden Zellen oder der letztgenannte Typ. Die genannten Teilchenformen sind in A. Echte, Advances in Chemical Serials, 222, S. 29, 1989, beschrieben.

Die Erfindung wird im folgenden anhand besonders bevorzugter Ausführungsbeispiele näher beschrieben.

### Beispiele

In den Beispielen werden die folgenden Verbindungen verwendet:

Cyclohexan, n-Butylacrylat, Allylacrylat, Acrylnitril und Styrol sind Produkte der BASF und werden ohne weitere Reinigung verwendet.

Luviskol^{®} K 90 stellt ebenfalls ein Produkt der BASF dar und ist ein Polyvinylpyrrolidon mit einem K-Wert von 90, gemessen 1%-ig in Wasser bei 25 °C. Die Messung des K-Werts wird in Cellulose Chemie, 13, 1932, S. 358 bis 364, beschrieben.

Tetra-Natrium-di-phosphat wurde von der Firma Merck, Azobisisobutyronitril von der Firma Akzo Chemicals und Allylmethacrylat von der Firma Fluka bezogen.

Als Stabilisator wurde 3-(3,5-Di-tert.-butyl-4-hydroxy-phenyl)-propionsäureoctadecylester verwendet, ein phenolisches Antioxidans, das unter der Bezeichnung Irganox 1076 von der Firma Ciba Geigy vertrieben wird.

Ertivinol^{®} ist ein Polyvinylalkohol der Firma Ercros.

### Peroxide

- Peroxid 1:: t-Butylperoxycrotinat
Die Temperatur für eine Halbwertszeit von einer Stunde beträgt 110°C.
- Peroxid 2:: t-Butyl-3-isopropenylcumyl-peroxid
Die Temperatur für eine Halbwertszeit von einer Stunde beträgt 139°C.

### Versuch 1 (Erfindungsgemäß)

a) Kautschukherstellung
In einen Kolben wurden 1100 g Cyclohexan eingefüllt, unter Stickstoff und Rühren auf 75°C erhitzt und danach 30 ml von Zulauf 1 und 4 ml von Zulauf 2 vorgelegt. Nach 15 Minuten erfolgte die Zugabe des Rests der zwei Zuläufe in ca. 4 Stunden.

| **Zulauf 1** | |
|---|---|
| 500 g | n-Butylacrylat |
| 4,75 g | Allylmethacrylat |
| 8,75 g | Peroxid 2 (1,75 Gew.-% bezogen auf Kautschuk) |

| **Zulauf 2** | |
|---|---|
| 42 ml | Aceton |
| 42 ml | Toluol |
| 550 mg | 2,2'-Azobis(isobutyronitril) |

b) Herstellung des Endproduktes
In einem Rotationsverdampfer wurde unter Vakuum das Cyclohexan entfernt und gegen Styrol ausgetauscht und dann mit Acrylnitril aufgestockt, um eine Mischung aus 69,2 Gew.-% Styrol, 23 Gew.-% Acrylnitril und 7,8 Gew.-% Kautschuk zu ergeben. 1923 g dieser Lösung wurden zusammen mit 2,31 g Irganox 1076 und 1,35 g t-Dodecylmercaptan in einen 51-Stahlkessel eingefüllt und unter Stickstoff und Rühren auf 110°C erhitzt. Nach 105 Minuten Polymerisationszeit (35 - 40 % Umsatz) erfolgte die Zugabe von 1,7 g Dicumylperoxid, 1900 g Wasser, 20 g Luviskol K 90, 2,0 g Tetra-Natrium-di-phosphat und 59,8 g einer 10%-igen Ertivinollösung in Wasser. Der Ansatz wurde wie folgt auspolymerisiert:
110°C für 3h
130°C für 3h
140°C für 6h.

Danach wurde gekühlt, das Polymer abfiltriert und getrocknet.

### Versuch 2

Versuch 1 wurde wiederholt, aber mit 20 g Peroxid 1 (4 Gew.-% bezogen auf den Kautschuk) statt 8,75 g Peroxid 2. Die Styrol-Acrylnitril-Polymerisation wurde bei 86°C durchgeführt.

### Versuch 3

Versuch 1 wurde wiederholt, jedoch wurden 10 g (statt 8,75 g) Peroxid 2 (2 Gew.-% bezogen auf Polymer) verwendet.

### Versuch 4 Vergleichsversuch (ohne in den Kautschuk eingebaute Peroxide)

Der Kautschuk wurde ohne Peroxid 1 und 2 hergestellt.
Als Radikalbildner für die Polymerisation wurde Dibenzoylperoxid verwendet.

Die Polymerisationstemperatur vor der Wasserzugabe betrug 86°C. Im übrigen wurde wie in Versuch 1 verfahren.

### Prüfung der Produkte

Die Produkte wurden zu Kleinnormstäbchen bei 240°C Schmelztemperatur und 60°C Formtemperatur gespritzt.

An diesen Formteilen wurde die Lochkerbschlagzähigkeit nach DIN 53753-L-3,0, Ausgabe 4/81, Schlagzähigkeit nach DIN 53453-n, Ausgabe 5/75, und die Kerbschlagzähigkeit nach DIN 53453-k, Ausgabe 5/75, gemessen.

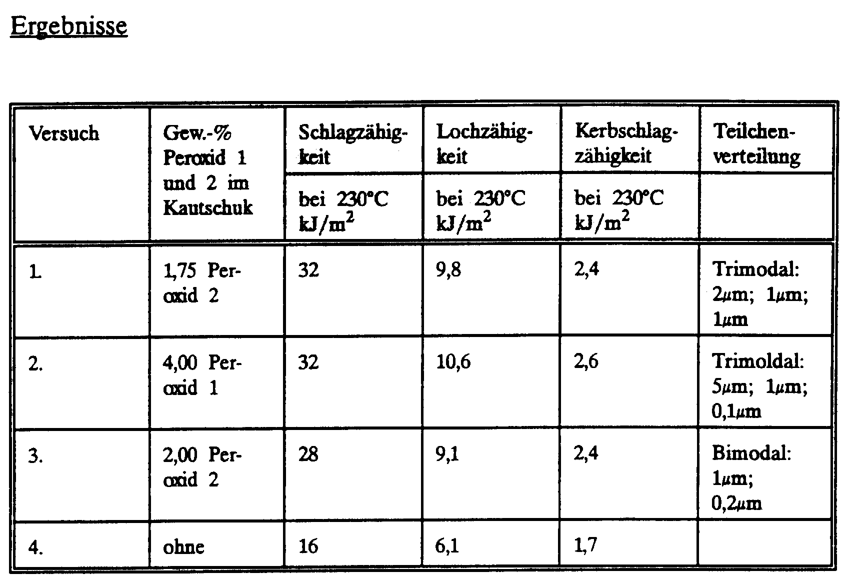

Wie ersichtlich, führen die einpolymerisierten Peroxide zu besseren mechanischen Eigenschaften der hergestellten Formmassen.

## Patentansprüche

1. Verfahren zur Herstellung von kautschukmodifizierten Formmassen, dadurch gekennzeichnet, daß in einer ersten Stufe ein erstes Gemisch (A), das zumindest ein Alkylacrylat oder -methacrylat (a) der allgemeinen Formel (I) 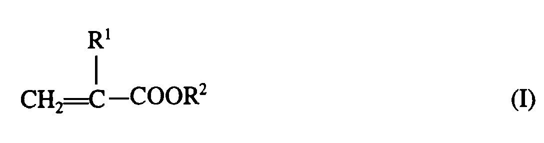
in der R¹ ein Wasserstoffatom oder eine Methylgruppe und R² eine Alkylgruppe mit 1 bis 32 Kohlenstoffatomen bedeutet, zumindest ein erstes Monomeres (b), das bei thermischer Zersetzung Radikale bildet, und gegebenenfalls ein zweites oder mehrere Monomere (c) in einem Anteil von bis zu 60 Gew.-% enthält, zu einem Kautschuk (B) mit einem Gehalt an Acrylat-Monomereinheiten von mindestens 30 Gew.-% polymerisiert wird, vorzugsweise mit freien Radikalen
in einer zweiten Stufe der entstandene Kautschuk (B) zur Bildung eines zweiten Gemisches (C) in einem dritten Monomeren (d) oder mehreren vermischt, vorzugsweise in diesem gelöst oder gequollen wird, und
in einer dritten Stufe das zweite Gemisch (C) mit freien Radikalen zu der kautschukmodifizierten Formmasse (D) polymerisiert wird, wobei die Polymerisation entweder durchgehend in Lösung oder in Masse durchgeführt oder nach einem Umsatz von mindestens 15 % als Suspensionspolymerisation weitergeführt wird, die kautschukmodifizierte Formmasse (D) 1 bis 60 Gew.-% des Kautschuks (B) enthält und die Kautschuke (B) in gepfropfter Form in der Formmasse (D) als Teilchen mit einem Durchmesser zwischen 0,1 und 20 µm in der Polymermatrix vorkommen.

2. Verfahren nach Anspruch 1, dadurch gekennzeichnet, daß R² eine Alkylgruppe mit 1 bis 18 Kohlenstoffatomen bedeutet.

3. Verfahren nach Anspruch 1 oder 2, dadurch gekennzeichnet, daß das Gemisch (A) die folgende Zusammensetzung aufweist:
30 bis 99,95 Gew.-% des Acrylats oder -methacrylats (a),
0,05 bis 10 Gew.-% des ersten Monomeren (b) und
0 bis 60 Gew.-% des zweiten Monomeren (c).

4. Verfahren nach einem der Ansprüche 1 bis 3, dadurch gekennzeichnet, daß kautschukmodifizierte Formmassen (D) hergestellt werden, die 5 bis 40 Gew.-%, bezogen auf die Gesamtmenge der Kautschukformmassen (D), des Kautschuks (B) enthalten.

5. Verfahren nach einem der Ansprüche 1 bis 4, dadurch gekennzeichnet, daß n-Butylacrylat oder Ethylhexylacrylat als Alkylacrylat oder -methacrylat (a) verwendet wird.

6. Verfahren nach einem der Ansprüche 1 bis 5, dadurch gekennzeichnet, daß als zweites Monomeres (c) ein solches verwendet wird, das zwei oder mehr polymerisierbare Doppelbindungen aufweist.

7. Verfahren nach einem der Ansprüche 1 bis 6, dadurch gekennzeichnet, daß das erste Monomere (b) eine Peroxygruppe, eine Diazogruppe oder eine gegen thermische Zersetzung empfindliche C-C-Doppelbindung als radikalbildende Gruppe enthält.

8. Verfahren nach einem der Ansprüche 1 bis 7, dadurch gekennzeichnet, daß als erstes Monomeres (b) tert.-Butyl-3-isopropenyl-cumyl-peroxyd und/oder tert.-Butyl-peroxycrotinat verwendet wird.

9. Verfahren nach einem der Ansprüche 1 bis 8, dadurch gekennzeichnet, daß als dritte Monomere (d) Styrol, Methylmethacrylat- und Acrylnitril verwendet werden.

10. Verfahren nach einem der Ansprüche 1 bis 9, dadurch gekennzeichnet, daß als zweites Monomeres (c) Allylmethacrylat verwendet wird.

11. Verfahren nach einem der Ansprüche 1 bis 10, dadurch gekennzeichnet, daß als zusätzliche Monomere (c) Styrol, Acrylnitril und/oder Methylmethacrylat verwendet werden.

12. Kautschukmodifizierte Formmasse, dadurch gekennzeichnet, daß sie nach einem der Verfahrensansprüche 1 bis 11 hergestellt ist und in einer Matrix eingebettete, Domänen bildende Teilchen des Kautschuks (B) enthält.

13. Kautschukmodifizierte Formmasse nach Anspruch 12, dadurch gekennzeichnet, daß die Kautschukteilchen im Form von Kapseln, Stäbchen, Tropfen, Labyrinthen, Zellen, Knäueln, Schalen, Stäbchenclustern oder Tropfenclustern vorliegen.

## Claims

1. A process for the preparation of a rubber-modified molding material, wherein, in a first stage, a first mixture (A) which contains at least one alkyl acrylate or methacrylate (a) of the formula (I) 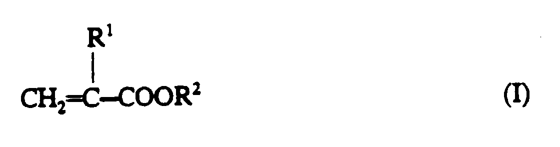 where
R¹ is hydrogen or methyl and R² is alkyl of 1 to 32 carbon atoms, at least one first monomer (b) which forms free radicals on thermal decomposition and, if required, a second monomer or a plurality of monomers (c) in an amount of up to 60% by weight is polymerized, preferably with free radicals, to give a rubber (B) containing at least 30% by weight of acrylate monomer units,
in a second stage, the resulting rubber (B) is mixed with a third monomer (d) or a plurality thereof, preferably dissolved or swollen therein, to form a second mixture (C), and
in a third stage, the second mixture (C) is polymerized with free radicals to give the rubber-modified molding material (D), the polymerization being carried out throughout as a solution or mass polymerization or, after a conversion of at least 15%, being continued as a suspension polymerization, the rubber-modified molding material (D) containing from 1 to 60% by weight of the rubber (B) and the rubbers (B) in grafted form in the molding material (D) occurring as particles having a diameter of from 0.1 to 20 µm in the polymer matrix.

2. A process as claimed in claim 1, wherein R² is alkyl of 1 to 18 carbon atoms.

3. A process as claimed in claim 1 or 2, wherein the mixture (A) has the following composition:
from 30 to 99.95% by weight of the acrylate or methacrylate (a),
from 0.05 to 10% by weight of the first monomer (b) and
from 0 to 60% by weight of the second monomer (c).

4. A process as claimed in any of claims 1 to 3, wherein a rubber-modified molding material (D) which contains from 5 to 40% by weight, based on the total amount of the rubber molding material (D), of the rubber (B) is prepared.

5. A process as claimed in any of claims 1 to 4, wherein n-butyl acrylate or ethylhexyl acrylate is used as the alkyl acrylate or methacrylate (a).

6. A process as claimed in any of claims 1 to 5, wherein second monomer (c) used is one which has two or more polymerizable double bonds.

7. A process as claimed in any of claims 1 to 6, wherein first monomer (b) contains, as the group which forms free radicals, a peroxy group, a diazo group or a C-C double bond which is sensitive to thermal decomposition.

8. A process as claimed in any of claims 1 to 7, wherein tert-butyl 3-isopropenylcumyl peroxide or tert-butyl peroxycrotonate is used as first monomer (b).

9. A process as claimed in any of claims 1 to 8, wherein styrene, methyl methacrylate and acrylonitrile are used as third monomers (d).

10. A process as claimed in any of claims 1 to 9, wherein allyl methacrylate is used as second monomer (c).

11. A process as claimed in any of claims 1 to 10, wherein styrene, acrylonitrile or methyl methacrylate is used as additional monomer (c).

12. A rubber-modified molding material, which is prepared as claimed in any of process claims 1 to 11 and contains particles of the rubber (B) which are embedded in a matrix and form domains.

13. A rubber-modified molding material as claimed in claim 12, wherein the rubber particles are in the form of capsules, rods, drops, labyrinths, cells, coils, shells, rod clusters or drop clusters.

## Revendications

1. Procédé de préparation de masses à mouler modifiées par du caoutchouc, caractérisé en ce que, au cours d'une première étape, on polymérise un premier mélange (A) qui contient au moins un acrylate ou méthacrylate d'alkyle (a) de la formule générale (I) : 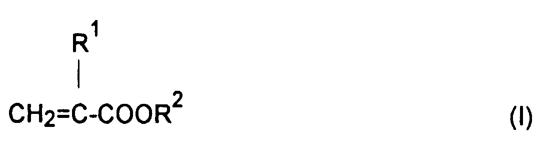 dans laquelle
R¹ représente un atome d'hydrogène ou le radical méthyle et R² représente un radical alkyle qui comporte de 1 à 32 atomes de carbone, au moins un monomère (b), qui forment des radicaux sous décomposition thermique, et éventuellement un second ou plusieurs monomères (c), en une proportion allant jusqu'à 60% en poids, en un caoutchouc (B) d'une teneur en unités monomériques d'acrylate d'au moins 30% en poids, de préférence, avec des radicaux libres,
au cours d'une seconde étape, on mélange le caoutchouc formé (B) en vue de la formation d'un second mélange (C) à un troisième monomère ou plusieurs monomères (d), de préférence, on l'y dissous ou gonfle, et
au cours d'une troisième étape, on polymérise le second mélange (C) avec des radicaux libres en une masse à mouler modifiée par du caoutchouc (D), où on entreprend la polymérisation en continu en solution ou dans la masse, ou bien on la poursuit sous forme de polymérisation en suspension après une conversion d'au moins 15%, la masse à mouler modifiée par du caoutchouc (D) contenant de 1 à 60% en poids du caoutchouc (B) et les caoutchoucs (B) se présentant sous forme greffée dans la masse à mouler (D) sous la forme de particules d'un diamètre compris entre 0,1 et 20 µm dans la matrice polymérique.

2. Procédé suivant la revendication 1, caractérisé en ce que R² représente un radical alkyle qui comporte de 1 à 18 atomes de carbone.

3. Procédé suivant la revendication 1 ou 2, caractérisé en ce que le mélange (A) présente la composition suivante:
30 à 99,95% en poids de l'acrylate ou du méthacrylate (a),
0,05 à 10% en poids du premier monomère (b), et
0 à 60% en poids du second monomère (c).

4. Procédé suivant l'une quelconque des revendications 1 à 3, caractérisé en ce que l'on prépare des masses à mouler modifiées par du caoutchouc (D) qui contiennent de 5 à 40% en poids, par rapport à la quantité totale des masses à mouler modifiées par du caoutchouc (D), du caoutchouc (B).

5. Procédé suivant l'une quelconque des revendications 1 à 4, caractérisé en ce que l'on utilise de l'acrylate de n-butyle ou de l'acrylate d'éthylhexyle à titre d'acrylate ou de méthacrylate d'alkyle (a).

6. Procédé suivant l'une quelconque des revendications 1 à 5, caractérisé en ce que l'on utilise, à titre de second monomère (c), un monomère du genre de ceux qui présentent deux ou plus de deux doubles liaisons polymérisables.

7. Procédé suivant l'une quelconque des revendications 1 à 6, caractérisé en ce que le premier monomère (b) contient un groupe peroxy, un groupe diazo ou une double liaison C-C sensible à la décomposition thermique à titre de groupe radicalogène.

8. Procédé suivant l'une quelconque des revendications 1 à 7, caractérisé en ce que l'on utilise, à titre de premier monomère (b), du peroxyde de tert-butyl-3-isopropényl-cumyle et/ou du peroxycrotinate de tert-butyle.

9. Procédé suivant l'une quelconque des revendications 1 à 8, caractérisé en ce que l'on utilise, à tire de troisième monomère (d), du styrène, du méthacrylate de méthyle et de l'acrylonitrile.

10. Procédé suivant l'une quelconque des revendications 1 à 9, caractérisé en ce que l'on utilise du méthacrylate d'allyle à titre de second monomère (c).

11. Procédé suivant l'une quelconque des revendications 1 à 10, caractérisé en ce que l'on utilise, à titre de monomère (c) supplémentaire, du styrène, de l'acrylonitrile et/ou du méthacrylate de méthyle.

12. Masse à mouler modifiée par du caoutchouc, caractérisée en ce qu'elle a été fabriquée par mise en oeuvre du procédé suivant l'une quelconque des revendications 1 à 11 et contient, noyées dans une matrice, des particules du caoutchouc (B) formant des domaines.

13. Masse à mouler modifiée par du caoutchouc suivant la revendication 12, caractérisée en ce que les particules de caoutchouc se présentent sous la forme de capsules, de bâtonnets, de gouttes, de labyrinthes, de cellules, de pelotes, de cuvettes, d'amas de bâtonnets ou d'amas de gouttelettes.
